# FASCICULE DE BREVET EUROPEEN

(11) **EP 2 185 942 B1**
(45) Date de publication et mention de la délivrance du brevet: **17.02.2016**
(21) Numéro de dépôt: 08851441.9
(22) Date de dépôt: 03.09.2008
(51) Int. Cl.: G01P 13/00, G01P 13/02, B63H 9/04

(54) **DISPOSITIF ET PROCÉDÉ DE DÉTERMINATION DU RÉGIME ET/OU DE LA DIRECTION D'UN ÉCOULEMENT DE FLUIDE**
VORRICHTUNG UND VERFAHREN ZUR FESTSTELLUNG DES STRÖMUNGSTYPS UND/ODER DER RICHTUNG EINER FLUIDSTRÖMUNG
DEVICE AND METHOD FOR DETERMINING THE FLOW REGIME AND/OR THE DIRECTION OF A FLUID FLOW

(30) Priorité: 05.09.2007 FR 0706196
(43) Date de publication de la demande: 19.05.2010
(73) Titulaire: Mer Agitée, 29940 La Foret Fouesnant (FR)
(72) Inventeur: VOISIN, Dimitri, F-29940 LA FORET FOUESNANT (FR); DESJOYEAUX, Michel, F-29940 LA FORET FOUESNANT (FR); RIVE, Clément, F-56100 LORIENT (FR)
(74) Mandataire: Laget, Jean-Loup
(86) Numéro de dépôt international: PCT/FR2008/001228
(87) Numéro de publication internationale: WO 2009/066013

(56) Documents cités:
- EP-A- 1 158 278
- DE-A1- 3 138 985
- DE-A1- 4 443 665
- DE-A1- 10 147 090
- US-A- 3 696 673
- US-A- 4 223 631
- US-A- 5 272 915
- US-A- 5 877 415

## Description

La présente invention concerne de manière générale la détermination du régime et/ou de la direction d'un écoulement de fluide.

L'invention concerne plus particulièrement un dispositif de détermination du régime et/ou de la direction d'un écoulement de fluide à proximité d'un élément soumis audit écoulement, tel qu'une voile, à l'aide d'au moins un penon, tel qu'un brin de laine, une portion de tissu, une portion de bande magnétique ou une portion de ruban. L'invention concerne également l'utilisation d'un tel dispositif de détermination ainsi qu'un procédé de détermination du régime et/ou de la direction d'un écoulement de fluide.

Les voiliers comportent généralement un ou plusieurs penons accrochés au gréement ou sur certaines parties de la voile. Les penons se présentent généralement sous la forme de banderoles légères, de tissu ou de laine, de manière à suivre l'écoulement du vent. Les penons sont ainsi couramment utilisés par le barreur pour visualiser la direction du vent, ainsi que le régime, laminaire ou turbulent, de l'écoulement de l'air sur la voile. Ces informations sont utilisées par le barreur pour régler sa voile, de manière à optimiser l'écoulement aérodynamique autour de la voile afin d'augmenter la poussée du vent dans la voile et ainsi la vitesse du voilier.

Les penons s'étendent généralement du bord d'attaque de la voile jusqu'à la partie arrière de la voile. Lorsque le penon s'étend horizontalement de manière régulière et stationnaire au sein de l'écoulement d'air, l'écoulement sur la voile est laminaire. Un écoulement laminaire correspond au réglage optimal de la voile.

Toute autre position du penon traduit un écoulement perturbé de l'air autour de la voile, c'est-à-dire un écoulement turbulent. Un tel écoulement turbulent est très instable et chaotique, ce qui pénalise le rendement aérodynamique de la voile. Le barreur modifie la trajectoire du bateau et/ou corrige alors le réglage de la voile, en agissant sur l'écoute, le chariot d'écoute et/ou le nerf de chute, jusqu'à obtenir un écoulement laminaire de l'air autour de la voile.

Cependant, dans l'obscurité ou lorsque les conditions météorologiques sont mauvaises, il n'est plus possible de visualiser les penons. Le barreur ne dispose plus d'informations sur le régime d'écoulement d'air autour de la voile et ne peut donc plus optimiser les réglages de cette voile.

Une solution est proposée par le document US5877415 qui décrit un appareil de détection du régime d'écoulement de l'air le long d'une surface. Cet appareil comporte essentiellement un penon et un disque monté rotatif autour d'un axe, auquel est rattaché le penon. Lorsque le flux d'air est turbulent et déplace le penon, le disque pivote autour de son axe de rotation. Le mouvement de rotation du disque est détecté et converti en un signal électrique qui est transmis à une unité de traitement. Le signal électrique est ensuite affiché de telle sorte que l'utilisateur puisse en déduire le degré de turbulence de l'écoulement d'air et ainsi régler la voile en conséquence pour obtenir un écoulement laminaire.

Cependant, cette solution oblige à raccorder le penon à un élément monté rotatif autour d'un axe de rotation. Cet élément monté rotatif autour de l'axe de rotation est soumis aux agressions extérieures, tel que le vent et l'eau de mer, ce qui risque de détériorer la liaison rotative de cet élément. Le risque de panne ou de dysfonctionnement d'un tel appareil est alors important.

On connaît également de l'état de la technique, notamment des documents DE 3138985, EP 1158278, DE 10147090 et US 3696673 des dispositifs de détermination de caractéristiques d'un écoulement de fluide qui comportent un organe flexible muni d'une jauge de contrainte. Ledit organe flexible est fixé par une de ses extrémités à un élément support disposé dans l'écoulement de fluide de sorte que les déformations enregistrées par la jauge de contrainte permettent de caractériser le régime de l'écoulement de fluide. Cependant, dans de tels dispositifs l'organe flexible s'étend sensiblement perpendiculairement audit élément support de sorte que l'organe flexible s'étend transversalement de l'écoulement de fluide qui circule au voisinage de l'élément support et perturbe ainsi le flux d'air. De tels dispositifs sont ainsi très intrusifs au sens où ils perturbent et modifient l'écoulement dont on souhaite déterminer les caractéristiques. Ces dispositifs pourraient convenir pour mesurer la vitesse de l'écoulement, mais ils ne permettent pas de déterminer de manière fiable le régime de l'écoulement de fluide qui circule à proximité immédiate de l'élément support de l'organe flexible. De tels dispositifs dans lesquels ledit organe flexible s'étend en travers de l'écoulement de fluide risquent également d'entrer en résonance, ce qui ne permet pas de déterminer les caractéristiques de l'écoulement proprement dit. Ainsi, de tels dispositifs sont non seulement intrusifs mais en plus ne permettent pas de refléter le régime d'écoulement du fluide.

La présente invention a pour but de proposer un dispositif qui permet de déterminer le régime de l'écoulement autour d'un élément tel qu'une voile, et/ou la direction de l'écoulement, même lorsque cet élément n'est pas visible et sans utiliser de pièces qui seraient montées mobiles par rapport à d'autres et qui seraient ainsi exposées aux agressions extérieures.

Un autre but de l'invention est de proposer un dispositif de détermination du régime et/ou de la direction d'un écoulement de fluide qui soit peu intrusif de manière à ne pas perturber ni modifier l'écoulement dont on souhaite déterminer les caractéristiques.

A cet effet, l'invention concerne un dispositif de détermination du régime et/ou de la direction d'un écoulement de fluide à proximité d'un élément soumis audit écoulement, tel qu'une voile, ledit dispositif comprenant au moins un penon, tel qu'un brin de laine, une portion de tissu, une portion de bande magnétique ou une portion de ruban,
caractérisé en ce que le dispositif comporte en outre au moins une bande flexible, telle qu'une plaque, de préférence en polymère ou en métal de faible épaisseur, dont au moins une zone est solidarisée à l'élément soumis audit écoulement, au moins une autre zone de la bande étant libre par rapport audit élément afin de permettre la flexion de la bande et ladite zone libre s'étendant sensiblement parallèlement audit élément au moins en l'absence d'écoulement de fluide, ledit penon étant fixé par une de ses extrémités à ladite zone libre de la bande flexible,
et en ce que le dispositif comporte des moyens de conversion des déformations subies par ladite bande en un signal électrique, par rapport à une position de référence, et des moyens de traitement desdits signaux électriques.

On entend par penon un élément longiligne léger ne se tenant pas par lui-même de sorte qu'il puisse être entraîné et porté par l'écoulement de fluide, même à faible vitesse, en s'orientant automatiquement selon ledit écoulement de fluide sans le perturber.

Dans un tel dispositif selon l'invention, la bande flexible est directement solidarisée à l'élément soumis à l'écoulement de fluide. Le dispositif ne comporte donc pas de pièces montées mobiles l'une par rapport à l'autre, ce qui confère au dispositif une bonne résistance aux agressions extérieures telles que l'eau de mer et les intempéries.

Le penon est entraîné en mouvement par l'écoulement de fluide et la bande flexible à laquelle il est rattaché est ainsi déformée en fonction du régime d'écoulement et/ou de la direction de cet écoulement. L'utilisation de moyens de conversion des déformations en signaux électriques permet de transmettre de manière électrique des informations relatives aux déformations de la bande flexible à l'unité de traitement. L'unité de traitement permet ensuite de déduire des signaux électriques reçus le régime d'écoulement et/ou la direction de cet écoulement. Le dispositif selon l'invention permet ainsi de déterminer le régime et/ou la direction de cet écoulement sans que le barreur n'ait besoin de voir la bande et/ou le penon.

L'utilisation d'un penon permet de bénéficier d'un organe très léger qui suit automatiquement l'écoulement de fluide. Le penon exerce ainsi sur la bande flexible des efforts qui sont fonctions des caractéristiques de l'écoulement, sans perturber l'écoulement de fluide autour de l'élément. En effet, la bande flexible reste globalement parallèle à l'écoulement d'air. On peut ainsi suivre aisément les efforts subis par la bande flexible du fait de l'écoulement de fluide sans que ladite bande ne vienne perturber l'écoulement et donc les mesures réalisées.

En outre, le penon, en particulier lorsqu'il est fixé à l'extrémité libre de la bande flexible, agit à la manière d'un bras de levier sur ladite bande et permet d'amplifier les déformations de la bande flexible.

Un tel dispositif qui comporte un penon rattaché à une bande flexible s'étendant sensiblement parallèlement à l'élément soumis audit écoulement forme donc un dispositif que l'on peut considérer comme très faiblement intrusif contrairement aux dispositifs de l'état de la technique. La détermination des caractéristiques de l'écoulement dudit fluide à proximité de l'élément qui porte la bande flexible, notamment le régime d'écoulement, s'avère ainsi très précise et très fiable.

Enfin, le fait d'utiliser un penon qui prolonge la bande, permet, si besoin, d'avoir une confirmation visuelle du régime d'écoulement et/ou de sa direction déterminés d'après les signaux électriques reçus par l'unité de traitement.

Selon une caractéristique avantageuse de l'invention, les moyens de conversion des déformations subies par ladite bande en signaux électriques comprennent au moins une jauge d'extensométrie.

L'utilisation de jauges d'extensométrie permet de convertir aisément et de manière fiable les déformations de la bande, en signaux électriques. En outre, les jauges d'extensométrie peuvent être disposées sur la bande selon différentes directions de manière à déterminer les diverses composantes de déformation de la bande et ainsi déterminer précisément les déformations liées au régime d'écoulement et les déformations liées à la direction de l'écoulement. En particulier, les jauges d'extensométrie permettent de déterminer aisément les déformations liées à la flexion de la bande et les déformations liées à la torsion de la bande.

Selon un mode de réalisation de l'invention, le dispositif comporte au moins une jauge d'extensométrie fixée sur au moins une des deux faces de la bande et orientée selon le plan de la bande et sensiblement perpendiculaire à l'axe de flexion de la bande.

Selon un autre mode de réalisation de l'invention, le dispositif comporte au moins une deuxième jauge d'extensométrie orientée également selon le plan de la bande et sensiblement perpendiculaire à l'axe de flexion de la bande, les deux jauges d'extensométrie étant fixées sur les faces opposées de la bande, de manière à mesurer, lors d'une flexion de la bande, les déformations subies, d'une part, par la partie de la bande en compression et, d'autre part, par la partie de la bande en traction.

Selon un autre mode de réalisation de l'invention, il est prévu au moins une paire de jauges d'extensométrie disposées sur au moins l'une des deux faces de la bande de manière à détecter les déformations de la bande dues à un couple de torsion exercé sur celle-ci.

Selon un autre mode de réalisation de l'invention, le dispositif comporte au moins deux paires de jauges d'extensométrie disposées respectivement sur les deux faces de la bande de manière à détecter les déformations de la bande dues à un couple de torsion.

Selon d'autres caractéristiques avantageuses de l'invention :
- les moyens de traitement comportent, d'une part, des moyens de comparaison du signal électrique reçu avec un signal de référence correspondant à ladite position de référence et, d'autre part, des moyens de détermination du régime et/ou de la direction de l'écoulement de fluide en fonction du résultat de ladite comparaison ;
- les moyens de traitement comportent également des moyens de communication visuels ou sonores du résultat de la détermination du régime et/ou de la direction de l'écoulement de fluide, à destination d'un utilisateur ;
- l'élément soumis audit écoulement est une pièce d'un voilier, de préférence un gréement ou une voile, l'écoulement de fluide étant l'écoulement de l'air.

L'invention concerne également l'utilisation d'un dispositif pour la détermination du régime et/ou de la direction d'un écoulement de fluide à proximité d'un élément soumis audit écoulement, tel qu'une voile d'un voilier soumise à un écoulement d'air, caractérisée en ce que ledit dispositif est tel que décrit ci-dessus.

L'invention concerne enfin un procédé de détermination du régime et/ou de la direction d'un écoulement de fluide à proximité d'un élément soumis audit écoulement, tel qu'une voile, à l'aide d'au moins un penon, tel qu'un brin de laine, une portion de tissu, une portion de bande magnétique ou une portion de ruban, caractérisé en ce qu'il comporte les étapes de :
- solidarisation audit élément d'au moins une zone d'au moins une bande flexible, telle qu'une plaque, de préférence en polymère ou en métal de faible épaisseur, au moins une autre zone de la bande étant laissée libre par rapport audit élément afin de permettre la flexion de ladite bande,
ladite bande flexible étant agencée de telle sorte que ladite zone libre s'étende sensiblement parallèlement audit élément, ledit penon étant fixé par une de ses extrémités à ladite zone libre de la bande flexible,
- conversion des déformations subies par ladite bande en un signal électrique, par rapport à une position de référence, et
- traitement desdits signaux électriques afin de déterminer le régime et/ou la direction dudit écoulement.

L'invention sera bien comprise à la lecture de la description suivante d'exemples de réalisation, en référence aux dessins annexés dans lesquels :
- la figure 1 est une vue de côté partielle d'un voilier équipé du dispositif de détermination du régime et/ou de la direction d'un écoulement de fluide selon l'invention ;
- la figure 2 est une vue schématique de côté d'une partie du dispositif de détermination selon un premier mode de réalisation de l'invention ;
- la figure 3 est une vue schématique de côté d'une partie du dispositif de détermination selon un deuxième mode de réalisation de l'invention ;
- la figure 4 est une vue schématique de côté d'une partie du dispositif de détermination selon un troisième mode de réalisation de l'invention ;
- la figure 5 est une vue schématique de côté d'une partie du dispositif de détermination selon un quatrième mode de réalisation de l'invention ;
- la figure 6 est une vue schématique du dispositif de détermination selon l'invention qui comporte des moyens de traitement de signal électrique.

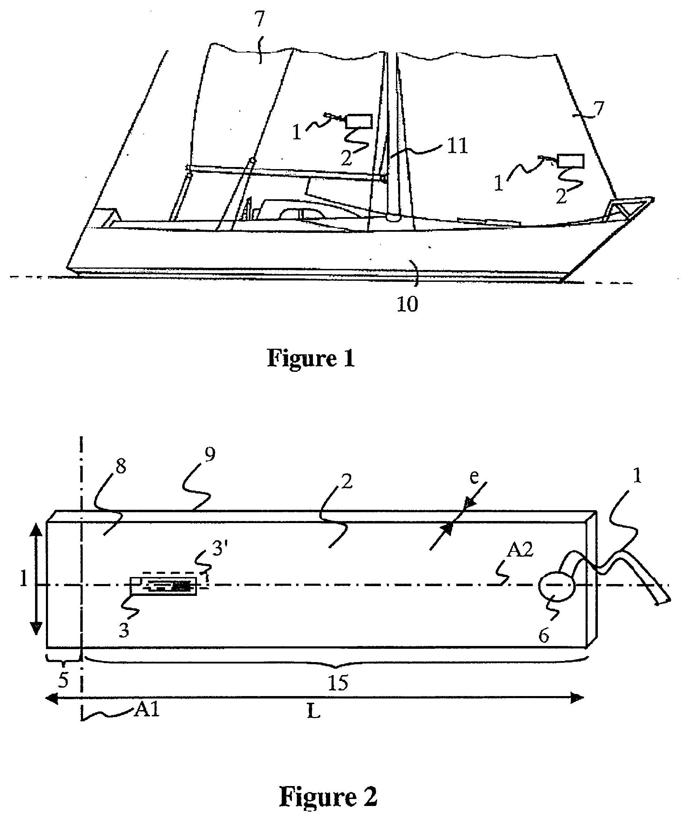

Sur la figure 1, est représenté un exemple de dispositif de détermination du régime et/ou de la direction d'un écoulement de fluide à proximité d'un élément 7 soumis audit écoulement. Le régime à déterminer est un régime turbulent ou laminaire.

L'élément 7 soumis audit écoulement est une pièce d'un voilier 10, de préférence un gréement 11 ou une voile 7, l'écoulement de fluide étant l'écoulement du vent. Dans l'exemple illustré aux figures 1 à 6, l'élément 7 soumis audit écoulement est une voile 7 d'un voilier 10.

De préférence, les deux faces intrados et extrados de la voile 7 sont équipées d'un tel dispositif de détermination du régime et/ou de la direction de l'écoulement.

De manière caractéristique à l'invention et comme illustré à la figure 2, le dispositif de détermination comporte une bande 2 flexible dont une zone 5 est solidarisée à la voile 7 soumise audit écoulement. La zone 5 de solidarisation de la bande 2 à la voile 7 forme une surface de contact qui, à la manière d'une liaison de type encastrement, empêche la rotation ou la translation de la bande par rapport à la voile mais permet la flexion de ladite bande. Au moins une autre zone 15 de la bande 2 est libre par rapport à la voile 7 afin de permettre la flexion de la bande 2. Ladite plaque 2 flexible est prolongée par un penon 1, tel qu'un brin de laine, un bout de tissu, un bout de toile de spi, une portion de bande magnétique ou une portion de ruban. Ledit penon est fixé par une de ses extrémités à ladite zone libre de la bande flexible. Bien entendu, la partie restante du penon est laissée libre de manière à être entraînée par l'écoulement du fluide. Le penon est de préférence réalisé en un matériau très léger de telle sorte que ledit penon suive l'écoulement de l'air le plus fidèlement possible et soit déplacé par l'écoulement même à faible vitesse d'écoulement, par exemple 5 km/h. Le penon est de préférence imperméable à l'eau pour ne pas être alourdi par l'humidité. La longueur du penon est de préférence comprise entre 1 et 20 cm.

Le dispositif comporte également des moyens de conversion 3 des déformations subies par ladite bande 2 en un signal électrique, par rapport à une position de référence, et des moyens de traitement 4 desdits signaux électriques. La position de référence est définie ici comme la position, ou l'état de déformation, de la bande 2 pour un régime d'écoulement laminaire et/ou une direction d'écoulement contenue dans le plan de la bande 2.

Ainsi, le dispositif permet de détecter le régime de l'écoulement ou sa direction, sans nécessiter de visualiser la plaque ni le penon. En outre, le dispositif ne comporte pas de pièces qui seraient montées mobiles par rapport à d'autres et qui seraient ainsi exposées aux agressions extérieures. On entend par pièces montées mobiles, des pièces montées à rotation ou à translation par rapport à d'autres pièces.

Préférentiellement, ladite bande 2 est une plaque flexible, de préférence en polymère, tel qu'un PVC, ou en métal de faible épaisseur, tel que de l'aluminium. Un autre matériau tel que le Delrin ® peut être utilisé. Cette plaque est également appelée corps d'épreuve du fait que ce sont les déformations de cette plaque qui vont être détectées et converties en signaux électriques. A titre d'exemple on peut utiliser une plaque dont les dimensions sont les suivantes :
Largueur I : 50 mm environ
Longueur L : 80 mm environ
Epaisseur e : de préférence inférieure à 1 mm

La longueur et la largeur de la plaque peuvent varier de manière à obtenir une surface d'environ 3 ou 4 cm².

La plaque 2 peut être solidarisée à la voile 7 en étant cousue ou collée par de la colle ou par un ruban adhésif. Il est également envisageable de procéder à la solidarisation de la plaque 2 à la voile lors de la fabrication de ladite voile 7.

Dans l'exemple illustré aux figures 1 à 6, la plaque 2 est solidarisée à la voile 7 par collage de la zone 5 de ladite plaque 2 au niveau de sa face arrière 9. Le positionnement de la zone 5 de solidarisation permet de définir un axe A1 de flexion potentielle de cette plaque 2, qui est ici sensiblement orthogonal à l'axe A2 longitudinal de la plaque, c'est-à-dire sensiblement vertical à l'état solidarisé de la plaque 2 à la voile 7, l'axe longitudinal de la plaque étant ici sensiblement horizontal. La zone 5 de solidarisation s'étend sur une longueur de quelques centimètres, ici 2 cm environ.

Les moyens de conversion 3 des déformations subies par ladite plaque 2 en signaux électriques sont formés par au moins une jauge d'extensométrie. Dans les modes de réalisation illustrés aux figures, la ou les jauges d'extensométrie sont disposées sur la zone 15 libre de la plaque 2. La ou les jauges d'extensométrie sont positionnées de préférence à proximité de l'axe A1 de flexion potentielle, c'est-à-dire dans la moitié de la zone 15 libre adjacente audit axe A1.

De manière générale au moins une partie de la ou de chaque jauge d'extensométrie est fixée sur la zone libre de la plaque. On peut prévoir que la ou chaque jauge soit disposée à cheval sur l'axe de flexion de la plaque, une partie de la jauge étant alors fixée à la zone de la plaque solidaire de la voile 7 et la partie restante de la jauge étant fixée à la zone libre de ladite plaque.

La zone 5 de la plaque 2 solidarisée à la voile 7 et la zone 6 de la plaque à laquelle est rattaché le penon 1, sont situées respectivement aux deux extrémités opposées de la plaque 2, chaque jauge d'extensométrie étant fixée à ladite plaque 2 entre lesdites extrémités de la plaque 2. Bien entendu, la zone 6 de rattachement du penon 1 à la plaque 2 fait partie de la zone 15 libre de la plaque 2.

Les déformations détectées par la jauge d'extensométrie sont des déformations résultant d'un effort de flexion et/ou de torsion suivant le mode de réalisation envisagé et détaillé ci-après.

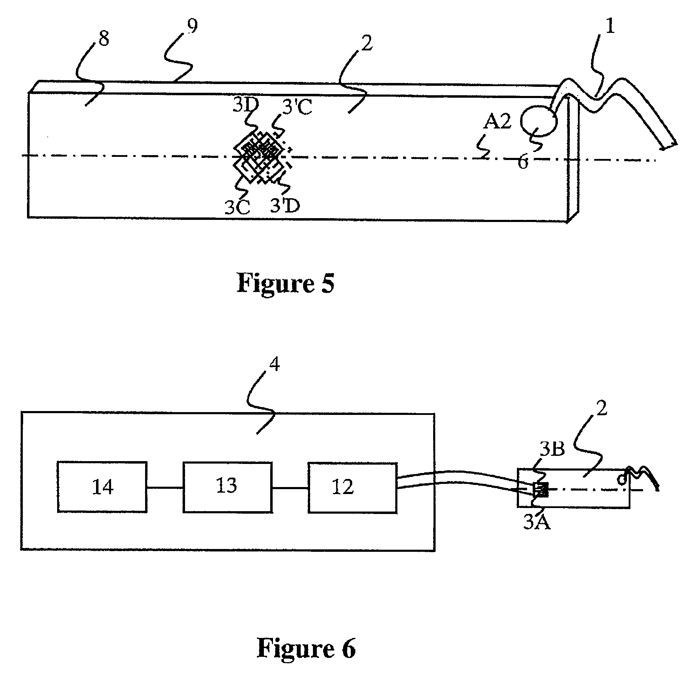

Les efforts appliqués par le penon 1 sur la plaque 2 sont représentatifs du mouvement du penon 1 et donc du régime et/ou de la direction d'écoulement. Ces efforts, auxquels est soumise la plaque 2, génèrent des déformations de la plaque 2 qui, grâce à chaque jauge d'extensométrie, sont converties en signaux électriques qui sont traités par les moyens de traitement 4 pour pouvoir être interprétés par l'utilisateur. En effet, une jauge d'extensométrie permet de suivre les déformations d'un élément, tel que la plaque 2, soumis à des contraintes, au moyen des variations de résistance électrique d'un conducteur électrique, en référence à la figure 6.

Chaque jauge d'extensométrie transmet ainsi à l'unité de traitement sous forme de signal électrique une valeur d'impédance (ou de résistance) variable en fonction des déformations de la plaque. Le traitement de signal réalisé par les moyens de traitement 4 est décrit plus en détail ci-après.

Selon un premier mode de réalisation illustré à figure 2, le dispositif de détermination comporte deux jauges d'extensométrie 3, 3' fixées respectivement sur les deux faces avant 8 et arrière 9 de la plaque 2. Les deux jauges d'extensométrie 3, 3' sont orientées selon le plan de la plaque 2 et sensiblement perpendiculaires à l'axe A1 de flexion de la plaque 2. Une telle orientation des jauges d'extensométrie 3, 3' permet de détecter et ainsi de convertir en signaux électriques les déformations de la plaque 2 dues à la flexion. En variante, on pourrait envisager de ne détecter la flexion qu'avec une seule jauge d'extensométrie disposée sur l'une des deux faces de la plaque 2.

Dans l'exemple illustré à la figure 2, la plaque 2 est longiligne et les jauges d'extensométrie 3, 3' sont ainsi orientées selon l'axe longitudinal A2 de la plaque 2.

La disposition des deux jauges d'extensométrie 3, 3' sur les faces opposées 8, 9 de la plaque 2, permet de détecter, lors d'une flexion de la plaque 2, les déformations subies, d'une part, par la partie de la plaque 2 en compression et, d'autre part, par la partie de la plaque 2 en traction. La détection des déformations étant ainsi plus précise, la détermination du régime d'écoulement à partir de ces déformations est plus fiable.

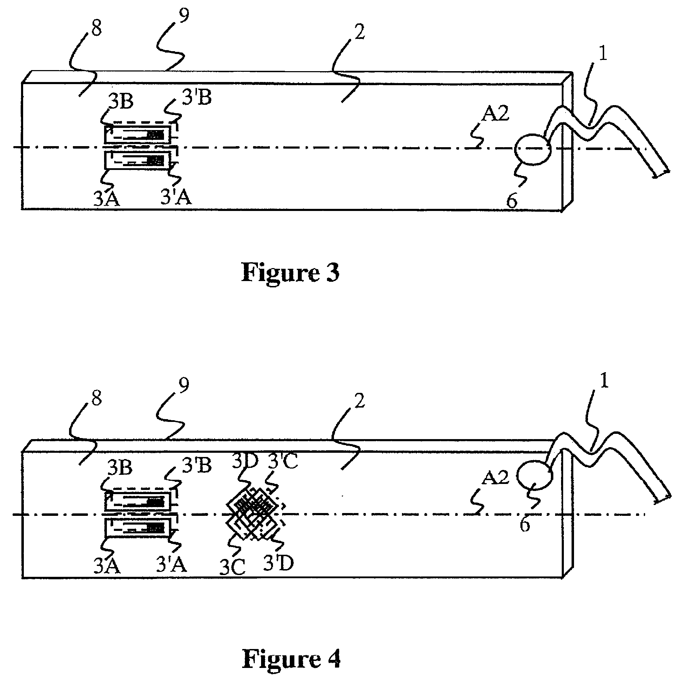

Selon un autre mode de réalisation illustré à la figure 3 et qui reprend les éléments du mode de réalisation de la figure 2, il est prévu que le dispositif de détermination comporte deux paires de jauges d'extensométrie 3A, 3B et 3'A, 3'B disposées respectivement sur les deux faces 8, 9 de la plaque 2 selon l'axe longitudinal A2 de la plaque. Les deux jauges d'extensométrie 3A, 3B et 3'A, 3'B d'une même paire sont orientées parallèlement l'une par rapport à l'autre, les deux jauges d'extensométrie d'une même paire 3A, 3B et, respectivement, 3'A, 3'B étant disposées sur une même face de manière symétrique par rapport à l'axe A2 de symétrie longitudinale de la plaque. L'utilisation de deux paires de jauges disposées sur les faces opposées de la plaque permet une mesure de la déformation de la plaque 2 indépendante de la variation de température pouvant exister d'une face à l'autre de la plaque, par exemple si l'une des faces est exposée au soleil.

Selon un mode de réalisation préférentiel qui est illustré à la figure 4 et qui reprend les éléments du mode de réalisation illustré à la figure 3, le dispositif comporte deux paires de jauges d'extensométrie 3C, 3D et 3'C, 3'D supplémentaires disposées respectivement sur les deux faces 8, 9 de la plaque 2 de manière à détecter les déformations de la plaque dues à un couple de torsion. Dans l'exemple illustré à la figure 4, les jauges d'extensométrie 3C, 3D et 3'C, 3'D supplémentaires sont orientées en croix, à 45 ° environ par rapport à l'axe longitudinal A2 de la plaque. Un tel montage des jauges d'extensométrie est couramment appelé montage en "rosette". Ici, l'angle entre les jauges d'extensométrie montées en rosette est sensiblement de 90° mais on pourrait envisager d'autres valeurs d'angles. On peut également envisager d'ajouter une troisième jauge d'extensométrie à chaque montage en rosette, chaque jauge d'extensométrie étant tournée de 30° par rapport à sa voisine. En variante, on peut envisager de n'utiliser une paire de jauges montées en rosette que sur l'une des faces de la plaque 2.

Selon un mode de réalisation illustré à la figure 5 et qui reprend certains des éléments du mode de réalisation illustré à la figure 4, la plaque 2 n'est équipée sur ses faces 8, 9 que de jauges d'extensométrie 3C, 3D et 3'C, 3'D montées en rosette. En variante, on peut envisager de n'utiliser une paire de jauges montées en rosette que sur l'une des faces de la plaque 2. Le montage en "rosette" permet de détecter des déformations de la plaque due à un couple de torsion exercé sur celle-ci (par le penon et/ou par l'écoulement). Le montage en "rosette" permet également de détecter des déformations par flexion de la plaque. Bien entendu, il est intéressant d'ajouter, comme dans le mode de réalisation préféré de la figure 4, des jauges d'extensométrie disposées dans le sens longitudinal de la plaque de manière à améliorer la précision et la fiabilité de la détection de la flexion.

Quel que soit le mode de réalisation envisagé ci-dessus, ou sa variante, et comme illustré à la figure 6, les moyens de traitement 4 comportent des moyens de comparaison 12 du signal électrique reçu avec un signal de référence correspondant à la position de référence, qui est la position, ou l'état de déformation, de la plaque pour un régime d'écoulement laminaire et/ou une direction d'écoulement contenue dans le plan de la plaque 2. Les moyens de traitement 4 comportent également des moyens de détermination 13 du régime et/ou de la direction de l'écoulement de fluide en fonction du résultat de cette comparaison. Les jauges d'extensométrie sont étalonnées de manière à établir le signal de référence correspondant.

A chaque valeur de signal de référence on ajoute et on soustrait une valeur dite de sensibilité choisie lors de l'étalonnage pour obtenir respectivement une valeur seuil supérieure et une valeur seuil inférieure.

Les moyens de traitement 4 comportent également des moyens de communication 14 du résultat de la détermination du régime et/ou de la direction de l'écoulement de fluide, à destination d'un utilisateur. De préférence, les moyens de communication 14 sont de type visuels, tel qu'un voyant lumineux ou un écran d'affichage, mais on peut également envisager en variante que les moyens de communication 14 soient du type sonores. Les moyens de traitement 4 peuvent également comporter un répéteur électronique.

L'information du régime et/ou de la direction de l'écoulement communiquée par les moyens de communication 14 permet d'avertir l'utilisateur, ici le barreur ou "skipper", de la pertinence des réglages de la voile.

Lorsque les moyens de comparaison 12 détectent que la valeur instantanée du moment de flexion auquel est soumise la plaque 2 est comprise dans la fourchette de valeurs seuil inférieure et supérieure prédéterminées, les moyens de détermination 13 concluent que le régime d'écoulement est laminaire. Le réglage de la voile est alors correct. A l'inverse, lorsque la valeur instantanée du moment de flexion est en dehors de cette fourchette de valeurs seuils inférieure et supérieure, les moyens de détermination 13 concluent que le régime d'écoulement est turbulent. Cette information est communiquée par les moyens de communication 14 à l'utilisateur qui peut alors régler la voile de manière à obtenir un régime d'écoulement laminaire. La comparaison de la valeur instantanée du moment de flexion par rapport à la valeur de référence peut être réalisée sur un intervalle de temps donné pour améliorer la fiabilité du résultat de la comparaison.

Lorsque le dispositif de détermination est conforme à l'un des modes de réalisation tel que représenté aux figures 4 et 5, ou selon une de leurs variantes, et lorsque les moyens de comparaison détectent une valeur instantanée de couple de torsion située entre les valeurs seuils inférieure et supérieure prédéterminées, les moyens de détermination 13 concluent que la direction de l'écoulement est contenue dans le plan moyen de la plaque. Le réglage de la voile est alors correct. A l'inverse, lorsque la valeur instantanée du couple de torsion est en dehors des valeurs seuils inférieure et supérieure, les moyens de détermination 13 concluent que la direction de l'écoulement n'est pas optimale puisque non contenue dans le plan moyen de la plaque. Cette information est communiquée par les moyens de communication 14 à l'utilisateur qui peut alors régler la voile de manière à obtenir la direction optimale de l'écoulement. La comparaison de la valeur instantanée du couple de torsion par rapport à la valeur de référence peut être réalisée sur un intervalle de temps donné pour améliorer la fiabilité du résultat de la comparaison.

Le dispositif de détermination peut également être associé à un dispositif de pilotage automatique du réglage de la configuration d'un élément soumis à un écoulement de fluide. Le dispositif de pilotage automatique est alors conçu pour piloter automatiquement le réglage de la configuration dudit élément en fonction du résultat de la détermination du régime et/ou de la direction de l'écoulement de fluide. L'information, sous forme de signal électrique, fournie par le dispositif de détermination permet alors un asservissement automatique, par le dispositif de pilotage automatique, du réglage de la voile de manière à garder un écoulement laminaire autour de ladite voile.

Le dispositif tel qu'illustré aux figures 1 à 6 permet également de déterminer visuellement de manière classique si le penon oscille ou reste droit dans l'écoulement d'air, ce qui traduit respectivement un écoulement d'air turbulent ou laminaire. Cela permet de confirmer visuellement, le cas échéant, le résultat fourni par le dispositif de détermination et facilite également l'étalonnage des jauges d'extensométrie de ce dispositif de détermination.

La présente invention n'est nullement limitée aux modes de réalisation décrits et représentés, mais l'homme du métier saura y apporter toute variante conforme à son esprit.

En vue de protéger le penon contre l'arrachage, on peut envisager d'utiliser un système d'enrouleur permettant d'escamoter le penon lorsque le dispositif de détermination n'est pas utilisé.

Dans le cas d'un voilier tel que décrit ci-dessus et illustré à la figure 1, on peut également prévoir de solidariser la plaque à toute partie du gréement 11.

Toujours dans le domaine maritime, un tel dispositif de détermination peut également être utilisé pour déterminer le régime et/ou la direction d'écoulement de l'eau autour d'une pièce immergée d'un voilier ou d'un bateau, telle que quille, voile de quille, dérive, foils, safran, ou encore toute partie de la coque, et permettre le réglage, éventuellement automatique, de l'orientation de ladite pièce, en fonction des informations déterminées.

Un tel dispositif de détermination est également applicable à tout élément soumis audit écoulement autour duquel il est utile de pouvoir déterminer le régime et/ou la direction d'un écoulement. Par exemple, un tel dispositif de détermination peut ainsi être utilisé pour déterminer le régime et/ou la direction de l'écoulement de l'air autour d'un skieur, d'un cycliste, ou d'une pièce telle que la voile d'un dispositif de vol à voile ou encore d'un parapente.

Un tel dispositif de détermination est également avantageusement applicable au domaine automobile pour déterminer l'écoulement de l'air autour d'un appendice soumis à un écoulement tel qu'un aileron arrière de manière à permettre le réglage, éventuellement automatique, de cet appendice pour réduire ou augmenter la traînée globale du véhicule. Le dispositif de détermination peut également être utilisé pour rechercher des points spécifiques d'appui de l'écoulement sur ledit appendice.

Un tel dispositif de détermination peut également être utilisé pour déterminer le régime d'écoulement en sortie d'une cheminée. De manière générale, le dispositif de détermination selon l'invention peut être utilisé pour optimiser l'écoulement de fluide dans des canalisations industrielles telles que les sorties de coude ou les vannes papillon.

Enfin, dans le domaine aéronautique, un tel dispositif de détermination peut servir à détecter le régime d'écoulement autour de pièces d'un avion, telles que les ailerons ou la dérive, pour détecter le décrochement et régler, éventuellement automatiquement, l'orientation de ces pièces, en fonction des informations déterminées.

## Revendications

1. Dispositif de détermination du régime et/ou de la direction d'un écoulement de fluide à proximité d'un élément (7) soumis audit écoulement, tel qu'une voile (7), ledit dispositif comprenant au moins un penon (1), tel qu'un brin de laine, une portion de tissu, une portion de bande magnétique ou une portion de ruban,
**caractérisé en ce que** le dispositif comporte en outre au moins une bande (2) flexible, telle qu'une plaque, de préférence en polymère ou en métal de faible épaisseur, dont au moins une zone (5) est solidarisée à l'élément (7) soumis audit écoulement, au moins une autre zone (15) de la bande (2) étant libre par rapport audit élément (7) afin de permettre la flexion de la bande (2) et ladite zone (15) libre s'étendant sensiblement parallèlement audit élément (7) au moins en l'absence d'écoulement de fluide, ledit penon étant fixé par une de ses extrémités à ladite zone libre de la bande flexible,
et **en ce que** le dispositif comporte des moyens de conversion (3, 3', 3A, 3B, 3'A, 3'B, 3C, 3D, 3'C, 3'D) des déformations subies par ladite bande (2) en un signal électrique, par rapport à une position de référence, et des moyens de traitement (4) desdits signaux électriques.

2. Dispositif selon la revendication 1, **caractérisé en ce que** les moyens de conversion (3, 3', 3A, 3B, 3'A, 3'B, 3C, 3D, 3'C, 3'D) des déformations subies par ladite bande (2) en signaux électriques sont formés par au moins une jauge d'extensométrie (3, 3', 3A, 3B, 3'A, 3'B, 3C, 3D, 3'C, 3'D).

3. Dispositif selon la revendication 2, **caractérisé en ce qu'**il comporte au moins une jauge d'extensométrie (3, 3', 3A, 3B, 3'A, 3'B, 3C, 3D, 3'C, 3'D) fixée sur au moins une des deux faces (8, 9) de la bande (2) et orientée selon le plan de la bande (2) et sensiblement perpendiculaire à l'axe (A1) de flexion de la bande (2).

4. Dispositif selon l'une des revendications 2 et 3, **caractérisé en ce qu'**il comporte au moins une deuxième jauge d'extensométrie (3, 3', 3A, 3B, 3'A, 3'B) orientée également selon le plan de la bande (2) et sensiblement perpendiculaire à l'axe (A1) de flexion de la bande (2), les deux jauges d'extensométrie (3, 3', 3A, 3B, 3'A, 3'B) étant fixées sur les faces (8, 9) opposées de la bande (2), de manière à mesurer, lors d'une flexion de la bande (2), les déformations subies, d'une part, par la partie de la bande (2) en compression et, d'autre part, par la partie de la bande (2) en traction.

5. Dispositif selon l'une des revendications 2 à 4, **caractérisé en ce qu'**il comporte au moins une paire de jauges d'extensométrie (3C, 3D, 3'C, 3'D) disposées sur au moins l'une des deux faces (8, 9) de la bande (2) de manière à détecter les déformations de la bande (2) dues à un couple de torsion exercé sur celle-ci.

6. Dispositif selon l'une des revendications 1 à 5, **caractérisé en ce que** les moyens de traitement (4) comportent, d'une part, des moyens de comparaison (12) du signal électrique reçu avec un signal de référence correspondant à ladite position de référence et, d'autre part, des moyens de détermination (13) du régime et/ou de la direction de l'écoulement de fluide en fonction du résultat de ladite comparaison.

7. Dispositif selon la revendication 6, **caractérisé en ce que** les moyens de traitement (4) comportent également des moyens de communication (14) visuels ou sonores du résultat de la détermination du régime et/ou de la direction de l'écoulement de fluide, à destination d'un utilisateur.

8. Dispositif selon l'une des revendications 1 à 7, **caractérisé en ce que** l'élément (7) soumis audit écoulement est une pièce d'un voilier (10), de préférence un gréement (11) ou une voile (7), l'écoulement de fluide étant l'écoulement de l'air.

9. Utilisation d'un dispositif pour la détermination du régime et/ou de la direction d'un écoulement de fluide à proximité d'un élément (7) soumis audit écoulement, tel qu'une voile (7) d'un voilier (10) soumise à un écoulement d'air, **caractérisée en ce que** ledit dispositif est conforme à l'une des revendications 1 à 8.

10. Procédé de détermination du régime et/ou de la direction d'un écoulement de fluide à proximité d'un élément (7) soumis audit écoulement, tel qu'une voile (7), à l'aide d'au moins un penon (1), tel qu'un brin de laine, une portion de tissu, une portion de bande magnétique ou une portion de ruban, **caractérisé en ce qu'**il comporte les étapes de :
- solidarisation audit élément (7) d'au moins une zone (5) d'au moins une bande (2) flexible, telle qu'une plaque, de préférence en polymère ou en métal de faible épaisseur, au moins une autre zone (15) de la bande (2) étant laissée libre par rapport audit élément (7) afin de permettre la flexion de ladite bande (2),
ladite bande flexible étant agencée de telle sorte que ladite zone (15) libre s'étende sensiblement parallèlement audit élément (7), ledit penon étant fixé par une de ses extrémités à ladite zone libre (15) de la bande flexible,
- conversion des déformations subies par ladite bande (2) en un signal électrique, par rapport à une position de référence, et
- traitement (4) desdits signaux électriques afin de déterminer le régime et/ou la direction dudit écoulement.

## Patentansprüche

1. Vorrichtung zur Feststellung des Strömungsregimes und/oder der Richtung einer Fluidströmung in der Nähe eines Elements (7), das dieser Strömung ausgesetzt ist, wie ein Segel (7), wobei die Vorrichtung mindestens ein Windfähnchen (1) wie ein Wollfaden, ein Stoffstück, ein Magnetbandstück oder ein Stück eines Streifens umfasst,
**dadurch gekennzeichnet, dass** die Vorrichtung ferner mindestens einen flexiblen Streifen (2) wie eine Platte, vorzugsweise aus Polymer oder aus Metall geringer Dicke, aufweist, von dem mindestens eine Zone (5) mit dem Element (7), das dem Fluss ausgesetzt ist, fest verbunden ist, wobei mindestens eine andere Zone (15) des Streifens (2) im Verhältnis zum Element (7) frei ist, um die Biegung des Streifens (2) zu erlauben, und sich die freie Zone (15) mindestens bei Abwesenheit von Fluidfluss etwa parallel zum Element (7) erstreckt, wobei das Windfähnchen mit einem seiner Enden an der freien Zone des flexiblen Streifens befestigt ist,
und dass die Vorrichtung des Umwandlungsmittel (3, 3', 3A, 3B, 3'A, 3'B, 3C, 3D, 3'C, 3'D) der von dem Streifen (2) im Verhältnis zu einer Referenzposition erlittenen Verformungen in ein elektrisches Signal und Verarbeitungsmittel (4) der elektrischen Signale aufweist.

2. Vorrichtung nach Anspruch 1, **dadurch gekennzeichnet, dass** die Umwandlungsmittel (3, 3', 3A, 3B, 3'A, 3'B, 3C, 3D, 3'C, 3'D) der von dem Streifen (2) erlittenen Verformungen in elektrische Signale von mindestens einer Extensometrielehre (3, 3', 3A, 3B, 3'A, 3'B, 3C, 3D, 3'C, 3'D) gebildet sind.

3. Vorrichtung nach Anspruch 2, **dadurch gekennzeichnet, dass** sie mindestens eine Extensometrielehre (3, 3', 3A, 3B, 3'A, 3'B, 3C, 3D, 3'C, 3'D) aufweist, die auf mindestens einer der zwei Seiten (8, 9) des Streifens (2) befestigt ist und gemäß der Ebene des Streifens (2) und etwa senkrecht zur Biegeachse (A1) des Streifens (2) ausgerichtet ist.

4. Vorrichtung nach einem der Ansprüche 2 und 3, **dadurch gekennzeichnet, dass** sie mindestens eine zweite Extensometrielehre (3, 3', 3A, 3B, 3'A, 3'B) aufweist, die ebenfalls gemäß der Ebene des Streifens (2) und etwa senkrecht zur Biegeachse (A1) des Streifens (2) ausgerichtet ist, wobei die zwei Extensometrielehren (3, 3', 3A, 3B, 3'A, 3'B) auf den gegenüberliegenden Seiten (8, 9) des Streifens (2) derart befestigt sind, um bei einer Biegung des Streifens (2) die Verformungen zu messen, die zum einen von dem Teil des Streifens (2) in Kompression und zum anderen von dem Teil des Streifens in (2) Zugbelastung erlitten werden.

5. Vorrichtung nach einem der Ansprüche 2 bis 4, **dadurch gekennzeichnet, dass** sie mindestens ein Paar von Extensometrielehren (3C, 3D, 3'C, 3'D) aufweist, die auf mindestens einer der zwei Seiten (8, 9) des Streifens (2) derart befestigt sind, um die Verformungen des Streifens (2) aufgrund eines auf diesen ausgeübten Torsionsmoments festzustellen.

6. Vorrichtung nach einem der Ansprüche 1 bis 5, **dadurch gekennzeichnet, dass** die Verarbeitungsmittel (4) zum einen Vergleichsmittel (12) des empfangenen elektrischen Signals mit einem Referenzsignal aufweisen, das der Referenzposition entspricht, und zum anderen Bestimmungsmittel (13) das Strömungsregime und/oder der Richtung der Fluidströmung in Abhängigkeit vom Ergebnis des Vergleichs.

7. Vorrichtung nach Anspruch 6, **dadurch gekennzeichnet, dass** die Verarbeitungsmittel (4) ebenfalls visuelle oder akustische Kommunikationsmittel (14) des Ergebnisses der Bestimmung das Strömungsregime und/oder der Richtung der Fluidströmung an einen Benutzer aufweisen.

8. Vorrichtung nach einem der Ansprüche 1 bis 7, **dadurch gekennzeichnet, dass** das Element (7), das der Strömung ausgesetzt ist, ein Teil eines Segelboots (10), vorzugsweise ein Takelwerk (11) oder ein Segel (7), ist, wobei die Fluidströmung der Luftstrom ist.

9. Verwendung einer Vorrichtung zur Feststellung des Strömungsregimes und/oder der Richtung einer Fluidströmung in der Nähe eines Elements (7) das dieser Strömung ausgesetzt ist, wie ein Segel (7) eines Segelboots (10), das einem Luftstrom ausgesetzt ist, **dadurch gekennzeichnet, dass** die Vorrichtung einem der Ansprüche 1 bis 8 entspricht.

10. Verfahren zur Feststellung des Strömungsregimes und/oder der Richtung einer Fluidströmung in der Nähe eines Elements (7), das diesem Fluss ausgesetzt ist, wie ein Segel (7), mit Hilfe von mindestens einem Windfähnchen (1) wie ein Wollfaden, ein Stoffstück, ein Magnetbandstück oder ein Stück eines Streifens, **dadurch gekennzeichnet, dass** es die folgenden Schritte umfasst:
- festes Verbinden des Elements (7) mit mindestens einer Zone (5) mindestens eines flexiblen Streifens (2) wie eine Platte, vorzugsweise aus Polymer oder aus Metall geringer Dicke, wobei mindestens eine andere Zone (15) des Streifens (2) im Verhältnis zum Element (7) frei gelassen ist, um die Biegung des Streifens (2) zu erlauben,
wobei der flexible Streifen derart ausgebildet ist, dass sich die freie Zone (15) etwa parallel zum Element (7) erstreckt, wobei das Windfähnchen mit einem seiner Enden an der freien Zone (15) des flexiblen Streifens befestigt ist,
- Umwandeln der von dem Streifen (2) im Verhältnis zu einer Referenzposition erlittenen Verformungen in ein elektrisches Signal, und
- Verarbeiten (4) der elektrischen Signale, um das Strömungsregime und/oder die Richtung der Fluidströmung zu bestimmen.

## Claims

1. A device for determining the flow regime and/or the direction of a fluid flow close to an element (7) subject to said flow, such as a sail, said device comprising at least a one dog-vane (1), such as a strand of wool, a portion of fabric, a magnetic tape portion or a ribbon portion,
**characterized in that** the device further includes at least a one flexible strip (2), such as a plate, preferably in polymer or in metal with a small thickness, at least one area (5) of which is secured to the element (7) subject to said flow, at least one other area (15) of the strip (2) being a free with respect to said element (7) in order to allow flexure of the strip (2) and said free area (15) substantially extending parallel to said element (7) at least in the absence of fluid flow, said dog-vane being attached through one of its ends to said free area of the flexible strip,
and **in that** the device includes means (3, 3', 3A, 3B, 3'A, 3'B, 3C, 3D, 3'C, 3'D) for converting the deformations undergone by said strip (2) into an electric signal, relatively to a reference position, and means (4) for processing said electric signals.

2. The device according to claim 1, **characterized in that** the means (3, 3', 3A, 3B, 3'A, 3'B, 3C, 3D, 3'C, 3'D) for converting the deformations undergone by said strip (2) into electric signals are formed by at least one strain gauge (3, 3', 3A, 3B, 3'A, 3'B, 3C, 3D, 3'C, 3'D).

3. The device according to claim 2, **characterized in that** it includes at least one strain gauge (3, 3', 3A, 3B, 3'A, 3'B, 3C, 3D, 3'C, 3'D) attached on at least one of both faces (8, 9) of the strip (2) and oriented along the plane of the strip (2) and substantially perpendicular to the flexure axis (A1) of the strip (2).

4. The device according to one of claims 2 and 3, **characterized in that** it includes at least one second strain gauge (3, 3', 3A, 3B, 3'A, 3'B) also oriented along the plane of the strip (2) and substantially perpendicular to the bending axis (A1) of the strip (2), both strain gauges (3, 3', 3A, 3B, 3'A, 3'B) being attached on the opposite faces (8, 9) of the strip (2), so as to measure, upon bending of the strip (2), the deformations undergone by, on the one hand, the compressed part of the strip (2), and, on the other hand the part of the strip (2) under tensile stress.

5. The device according to one of claims 2 to 4, **characterized in that** it includes at least one pair of strain gauges (3C, 3D, 3'C, 3'D) positioned on at least one of both faces (8, 9) of the strip (2) is so as to detect the deformations of the strip (2) due to a torsional torque exerted on the latter.

6. The device according to one of claims 1 to 5, **characterized in that** the processing means (4) include means (12) for comparing the received electric signal with a reference signal corresponding to said reference position on the one hand and means (13) for determining the flow regime and/or the direction of the fluid flow according to the result of said comparison on the other hand.

7. The device according to claim 6, **characterized in that** the processing means (4) also include visual or audio means (14) for communicating the results of the determination of the flow regime and/or the direction of the fluid flow to a user.

8. The device according to one of claims 1 to 7, **characterized in that** the element (7) that is subjected to said flow is a part of a sailing boat (10), preferably rigging (11) or a sail (7), the fluid flow being the airflow.

9. The use of a device for determining the flow regime and/or the direction of a fluid flow and close to an element (7) subject to said flow, such as a sail (7) of a sailing boat (10) subject to the airflow, **characterized in that** said device is compliant with one of claims 1 to 8.

10. A method for determining the flow regime and/or the direction of a fluid flow close to an element (7) that is subjected to said flow, such as a sail (7), by means of at least one dog-vane (1) such as a strand of wool, a portion of fabric, a magnetic tape portion or a ribbon portion, **characterized in that** it includes the steps:
- securing to said element (7) at least one area (5) of at least one flexible strip (2), such as a plate, preferably in polymer or in metal with a small thickness, at least one other area (15) of the strip (2) being left free relatively to said element (7) so as to allow bending of said strip (2),
said flexible strip being laid out such that said free area (15) substantially extends parallel to said element (7), said dog-vane being attached through one of its ends to said free area (15) of the flexible strip,
- converting the deformations undergone by said strip (2) into an electric signal, relatively to a reference position, and
- processing (4) said electric signals in order to determine the flow regime and/or the direction of said flow.
